(19) Europäisches Patentamt / European Patent Office / Office européen des brevets

(11) **EP 4 544 500 B1**

(12) **EUROPEAN PATENT SPECIFICATION**

(45) Date of publication and mention of the grant of the patent:
**05.08.2026 Bulletin 2026/32**

(21) Application number: **22738357.7**

(22) Date of filing: **21.06.2022**

(51) International Patent Classification (IPC):
**G06T 7/62** *(2017.01)*

(52) Cooperative Patent Classification (CPC):
**G06T 7/62**

(86) International application number:
**PCT/EP2022/066846**

(87) International publication number:
**WO 2023/247015 (28.12.2023 Gazette 2023/52)**

(54) **DETERMINING A SCALE FACTOR**

BESTIMMUNG EINES SKALENFAKTORS

DÉTERMINATION D'UN FACTEUR D'ÉCHELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.04.2025 Bulletin 2025/18**

(73) Proprietor: **Telefonaktiebolaget LM Ericsson (publ)**
**164 83 Stockholm (SE)**

(72) Inventors:
• **DIMA, Elijs**
  **194 42 Upplands Väsby (SE)**
• **GRANCHAROV, Volodya**
  **171 67 SOLNA (SE)**

(74) Representative: **Ericsson**
**Patent Development**
**Torshamnsgatan 21-23**
**164 80 Stockholm (SE)**

(56) References cited:
**US-A1- 2021 056 751     US-A1- 2022 091 486**

## Description

TECHNICAL FIELD

Disclosed are embodiments related to methods and apparatus for determining a scale factor. The scale factor may be used for calculating real-world dimension(s) of a three-dimensional (3D) reconstructed space.

BACKGROUND

Today 3D reconstruction of a space is widely used in various fields. For example, for home renovation, one or more 360-degree cameras may be used to capture multiple shots of a kitchen that is to be renovated, and the kitchen may be reconstructed in a 3D virtual space using the captured multiple images. The generated 3D reconstruction of the kitchen can be displayed on a screen and manipulated by a user in order to help the user to visualize how to renovate the kitchen.

SUMMARY

However, certain challenges exist. For example, in existing solutions, 360-degree cameras alone cannot determine the real-world dimension(s) of a reconstructed 3D space. Multiple shots of 360 camera(s) may be used to estimate a scene geometry of a reconstructed 3D space but the dimensions of the reconstructed 3D space measured by the camera(s) would be in an arbitrary scale. Knowing only the dimension(s) in an arbitrary scale (a.k.a., "relative dimension(s)) may prevent using the estimated scene geometry for measurement purposes and may complicate comparisons and embeddings of multiple separate reconstructions.

Learned depth-prediction methods, such as DEfSI (Depth Estimation from a Single Image) can be used but error in the depth estimation and the overall scale prohibits use of such method in industrial application, where accurate measurement is a must. Thus, there is a need for a way to determine the real-world dimension(s) (a.k.a., "absolute dimension(s)) of the 3D space accurately without using any depth sensors. In this respect, US2021/056751 A1 and US2022/091486 A1 represent background art.

Accordingly, in one aspect of embodiments of this disclosure, there is provided a method of determining a scale factor according to claim 1.

In another aspect, there is provided a computer program comprising instructions which when executed by processing circuitry cause the processing circuitry to perform the method of the embodiments described above.

In a different aspect, there is provided an apparatus for determining a scale factor according to claim 11.

In a different aspect, there is provided an apparatus comprising a processing circuitry; and a memory. The memory contains instructions executable by said processing circuitry, whereby the apparatus is operative to perform the method of the embodiments described above.

Embodiments of this disclosure allow determining real-world dimension(s) of a reconstructed 3D space without directly measuring the real-world dimension(s) using a depth sensor such as a Light Detection and Ranging (LiDAR) sensor, a stereo camera, or a laser range meter. More specifically, in the embodiments of this disclosure, a scale factor for scaling an arbitrary dimension of a reconstructed 3D space into a real-world dimension of a real-world environment. Furthermore, in the embodiments of this disclosure, the method for determining the scale factor is fully automated, and thus removes human error (e.g., the error of a technician performing any manual measurement).

The accompanying drawings, which are incorporated herein and form part of the specification, illustrate various embodiments.

BRIEF DESCRIPTION OF THE DRAWINGS

FIG. 1 shows an exemplary scenario where embodiments of this disclosure are implemented.

FIG. 2 shows an example of a captured image.

FIG. 3 shows an exemplary reconstructed 3D space.

FIG. 4 shows a process according to some embodiments.

FIG. 5 shows relationships between various points in a reconstructed 3D space.

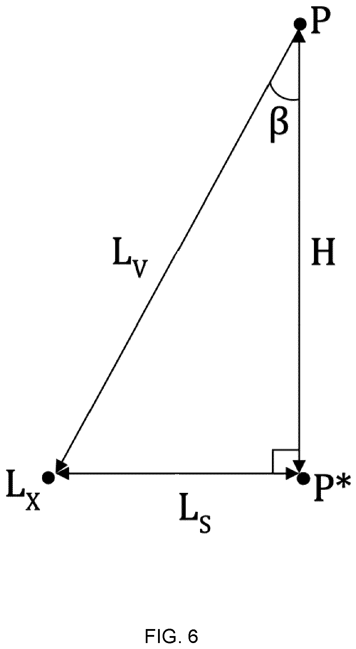

FIG. 6 shows a method of calculating a real height value according to some embodiments.

FIG. 7 shows a process according to some embodiments.

FIG. 8 shows an apparatus according to some embodiments.

DETAILED DESCRIPTION

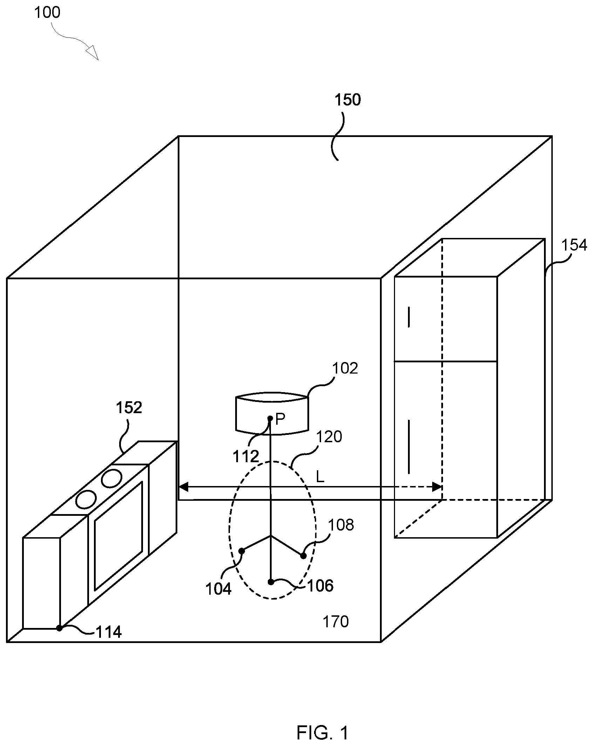

FIG. 1 shows an exemplary scenario 100 where embodiments of this disclosure are implemented. In scenario 100, a 360-degree camera (herein after, "360 camera") 102 is used to capture a 360-degree view of a kitchen 150. In kitchen 150, there are an oven 152 and a refrigerator 154. In this disclosure, a 360 camera is defined as any camera that is capable of capturing a 360-degree view of a scene. In some embodiments, instead of a 360-degree camera, a non 360-degree camera (e.g., a camera capable of capturing a wide view (but not 360-degree view) of a real-world environment, which includes the view of the base of the camera (e.g., tripod)) can be used. Camera 102 may be a single image capturing unit or may comprise a plurality of image capturing units.

As shown in FIG. 1, camera 102 may include a supporting base 120. One example of supporting base 120 is a tripod including a first reference point 104, a second reference point 106, and a third reference point 108. First, second, and third reference points 104-108 are positioned such that when camera 102 is used for capturing a 360-degree view of kitchen 150, first, second, and third reference points 104-108 are included in the captured image. Even though, in FIG. 1, support base 120 has the form of a tripod, in the embodiments of this disclosure, support base 120 may be any structure that is capable of supporting camera 102 and includes one or more reference points that can be captured by camera 102.

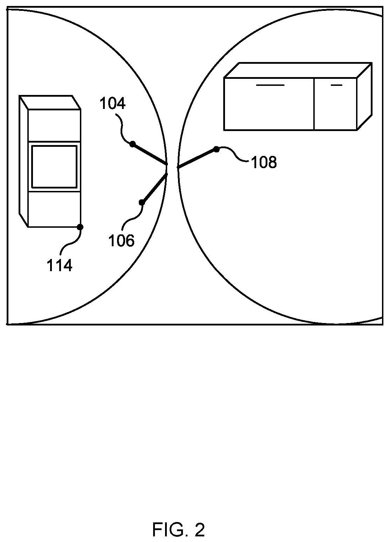

In addition to capturing first, second, and third reference points 104-108, when camera 102 is used for capturing a 360-degree view of kitchen 150, camera 102 may also capture a plurality of points (e.g., 114) on the floor (a.k.a., "floor points"). FIG. 2 shows an example of the 360-degree image captured by camera 102 in scenario 100.

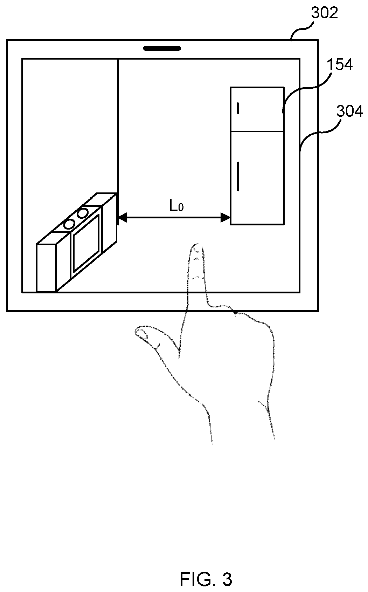

As shown in FIG. 3, the captured 360-degree view of kitchen 150 may be displayed at least partially on a display 304 (e.g., a liquid crystal display, an organic light emitting diode display, etc.) of an electronic device 302 (e.g., a tablet, a mobile phone, a laptop, etc.). Note that even though FIG. 3 shows that only a partial view of kitchen 150 is displayed on display 304, in some embodiments, entire 360-degree view of kitchen 150 may be displayed. Also the curvature of the 360-degree view is not shown in FIG. 3 for simplification purpose.

In some scenarios, it may be desirable to display a real-world length of a virtual dimension (e.g., "$L_0$") on display 304 (Note that $L_0$ shown in FIG. 3 is a length of the dimension in an arbitrary scale). For example, in order to help a user to determine whether a particular kitchen sink will fit into the space between a wall and a left side of refrigerator 154, it may be desirable to show the real-world length of the virtual dimension $L_0$ on display 304. However, as discussed above, in existing solutions, a real-world length of a dimension of a reconstructed 3D space cannot be accurately measured or determined by 360 camera(s) alone.

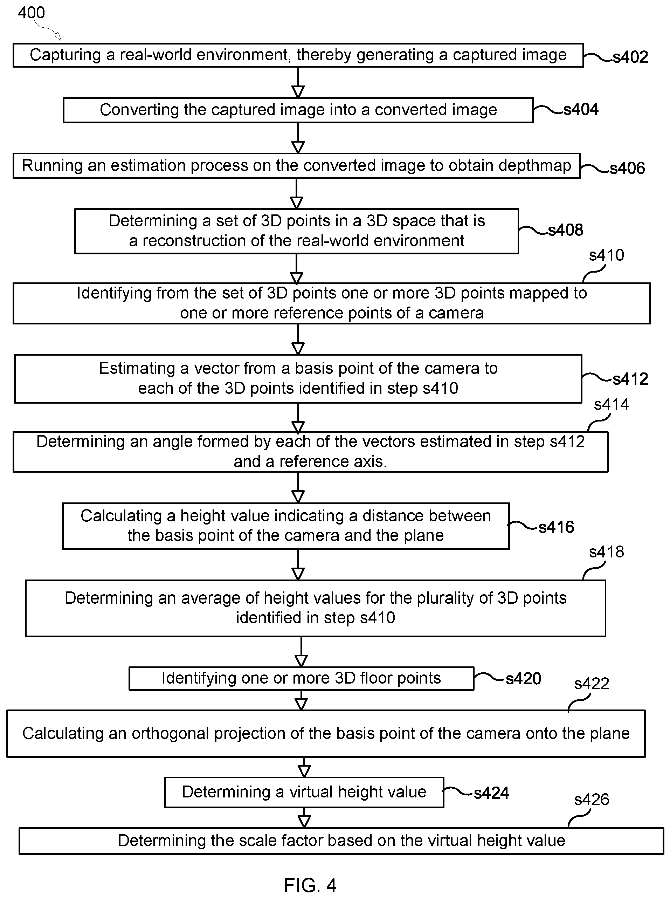

Accordingly, in some embodiments of this disclosure, a process 400 shown in FIG. 4 is performed, in order to determine a scale factor. The scale factor can be used to convert virtual dimension(s) (e.g., "$L_0$" shown in FIG. 3) of a 3D space (which is a reconstruction of a real-world environment) into real-world dimension(s) (e.g., "L" shown in FIG. 1) of the real-world environment. For example, L may be equal to $L_0 \times$ the scale factor or $L_0$ / the scale factor. Process 400 may begin with step s402.

Step s402 comprises capturing a real-world environment (e.g., kitchen 150 shown in FIG. 1) using camera 102, thereby obtaining a captured image. In one embodiment, camera 102 includes a fisheye lens, and thus the captured image is a fisheye image $I_F$. For the purpose of simple explanation, the captured image will be referred as the fisheye image $I_F$.

Step s404 comprises converting the fisheye image $I_F$ into a converted image (e.g., an equirectangular image $I_{EQN}$). For the purpose of simple explanation, the converted image will be referred as the equirectangular image $I_{EQN}$. The concept of a fisheye image, an equirectangular image, and converting a fisheye image into an equirectangular image is well known in the art, and thus are not explained in detail in this disclosure.

Step s406 comprises running a single-shot deep-learning depth estimation process such as Deep Learning Based Epidemic Forecasting with Synthetic Information (DEfSI described in https://github.com/niranjan-v/Depth-Estimation-from-Single-Image) on the equirectangular image in order to obtain depth map of the image. As known in the art, depth map of an image is an array of depth values indicating a 3D depth of each point in the image with respect to a reference point in a 3D environment.

Step s408 comprises determining a set of 3D points in a 3D space that is a reconstruction of the real-world environment (e.g., kitchen 150). In this disclosure, a 3D point is a point defined in a coordinate system of a virtual 3D space. Here, in the coordinate system of the virtual 3D space, a basis point 112 of camera 102 may be set as the origin. One example of basis point 112 is a center point of camera 102. In other words, the coordinates of the 3D points may be defined with respect to basis point 112 of camera 102. The set of 3D points is also referred as a point cloud in this disclosure.

Step s410 comprises identifying from the set of 3D points one or more 3D points mapped to the reference points of supporting base 120 of camera 102. For example, step s410 comprises identifying first, second, and third reference points 104-108.

In performing step s410, in some embodiments, segmentation/growing described in https://docs.opency.org/4.x/d3/db4/tutorial_py_watershed.html may be used to isolate the region showing portion(s) of the body of camera 102 (e.g., the tip points of the tripod of camera 102) in $I_{EQN}$.

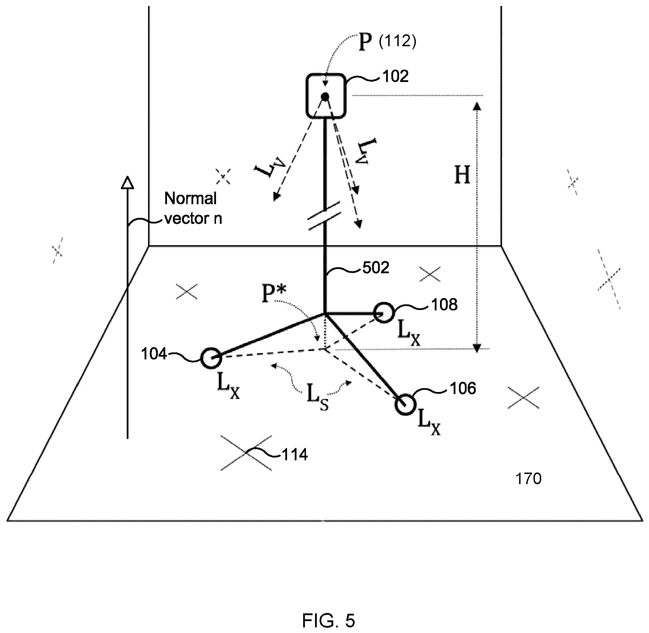

Step s412 comprises estimating a directional vector from basis point 112 of camera 102 to each of the 3D points identified in step s410 (e.g., first, second, and third reference points 104-108). The pixel coordinates of each of the 3D points in $I_{EQN}$ correspond to longitude and latitude angles, which form the directional vector $L_V$, as shown in FIG. 5.

Step s414 comprises determining an angle formed by each of the directional vectors estimated in step s412 with respect to a reference axis (e.g., 502 shown in FIG. 5).

Step s416 comprises calculating a height value (a.k.a., a first distance value) indicating a distance between basis point 112 of camera 102 and plane 170 on which basis point 112 of camera 102 are rested, based on the angle determined in step s414 and a predefined distance. In some embodiments, the predefined distance may be Ls shown in FIG. 5, which indicates a distance between a point projected from basis point 112 of camera 102 to plane 170 and one of the 3D points identified in step s410. In some embodiments, $H = \frac{L_S}{\tan(\beta)}$, where H is the height value, Ls is the predefined distance, and $\beta$ is the angle determined in step s414.

In case more than one 3D point is identified in step s410, performing steps s412-416 for each of the identified 3D points would result in multiple height values. In such case, step s418 may be performed. Step s418 comprises determining an average of the height values obtained in step s416. The average of the height values corresponds to an actual physical distance between camera 102 and plane 170.

Step s420 comprises, using the captured image (e.g., $I_{EQN}$), identifying one or more 3D floor points. Here a 3D floor point is a virtual 3D point lying on a plane (e.g., plane 170). One example of the 3D floor point is a point 114 shown in FIGS. 1 and 5.

Step s422 comprises, calculating an orthogonal projection P* of basis point 112 (P) of camera 102 onto plane 170 using the coordinate of the 3D floor point, the coordinate of basis point 112, and a normal vector of plane 170. As shown in FIG. 5, the orthogonal projection is an intersection point of reference axis 502 and plane 170. In some embodiments, the coordinate of the intersection point P* may be calculated as follows: $P* = P - (n \cdot (P - O))\, n$, where P* is the coordinate of intersection point P*, P is the coordinate of basis point 112 of camera 102, O is the coordinate of 3D floor point 114, and n is a normal vector of the plane.

Step s424 comprises determining a virtual height value (a.k.a., a second distance value) indicating a distance between reference point P of camera 102 and intersection point P* in the virtual 3D space. In other words, the virtual height value indicates a height level of camera 102 in the virtual 3D space.

Step s426 comprises determining the scale factor that transforms the virtual height value into the real height value, based on the virtual height value and the real height value. For example the scale factor may be calculated as follows: $S = \frac{H_{in}}{H_{avg}} \ or \ \frac{H_{avg}}{H_{in}}$, where S is the scale factor, $H_{in}$ is virtual height value, and $H_{avg}$ is the actual height value.

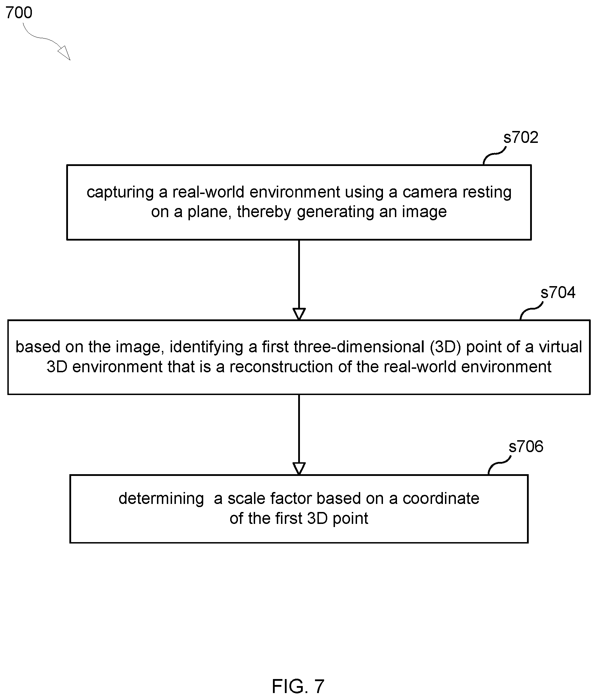

FIG. 7 shows a process 700 for determining a scale factor, according to some embodiments. Process 700 may begin with steps 702. Step s702 comprises capturing a real-world environment using a camera resting on a plane, thereby generating an image, wherein the camera comprises a supporting base including a first reference point. Step s704 comprises, based on the image, identifying a first three-dimensional (3D) point of a virtual 3D environment that is a reconstruction of the real-world environment, wherein the first 3D point is mapped to the first reference point of the supporting base. Step s706 comprises determining the scale factor based on a coordinate of the first 3D point.

In some embodiments, the supporting base is a tripod, and the first reference point is a tip of the tripod.

The method further comprises based on the coordinate of the first 3D point, calculating a first distance value indicating a real-world distance between the camera and the plane; and calculating a second distance value indicating a virtual distance between the camera and the plane, wherein the scale factor is determined based on the first and second distance values.

The method further comprises determining a first directional vector between the first 3D point and the camera; and determining an angle value indicating an angle formed by the first directional vector with respect to a reference axis, wherein the first distance value is calculated using the angle value, and the reference axis is perpendicular to the plane.

The first distance value is calculated using the angle value and a third distance value, and the third distance value indicates a real-world distance between the first reference point of the supporting base and an intersection point of the reference axis and the plane.

In some embodiments, $H = \frac{L_S}{\tan(\beta)}$, where H is the first distance value, Ls is the third distance value, and $\beta$ is the angle value.

In some embodiments, the method comprises based on the image, identifying a 3D floor point on the plane; and determining a coordinate of an intersection point of a reference axis and the plane based on a coordinate of the 3D floor point and a coordinate of a basis point of the camera, wherein the second distance value is calculated based on the coordinate of the intersection point and the coordinate of the basis point of the camera.

In some embodiments, $P* = P - (n \cdot (P - O))\, n$, where P* is the coordinate of the intersection point, P is the coordinate of the basis point of the camera, O is the coordinate of the 3D floor point, and n is a normal vector of the plane.

In some embodiments, the supporting base comprises a plurality of reference points including the first reference point, and the method further comprises: based on the image, identifying a plurality of 3D points of the virtual 3D environment, wherein each of the plurality of 3D points is mapped to each of the plurality of reference points; and determining the scale factor based on coordinates of the plurality of 3D points.

In some embodiments, the method further comprises determining a directional vector between each of the plurality of 3D points and a virtual basis point of the camera; determining an angle value indicating an angle formed by each of the determined directional vectors with respect to a reference axis; and calculating a plurality of distance values using the determined angle values and one or more reference distance values, wherein said one or more reference distance values indicate a reference distance between each of the plurality of reference points of the supporting base and an intersection point of the reference axis and the plane within the real-environment, and the scale factor is determined based on an average of the plurality of distance values.

In some embodiments, $S = \frac{H_{in}}{H_{avg}} \ or \ \frac{H_{avg}}{H_{in}}$ , where S is the scale factor, $H_{in}$ is the second distance value, and $H_{avg}$ is the average of the plurality of distance values.

In some embodiments, the scale factor is for determining a real-world dimension of an item included in the real-world environment.

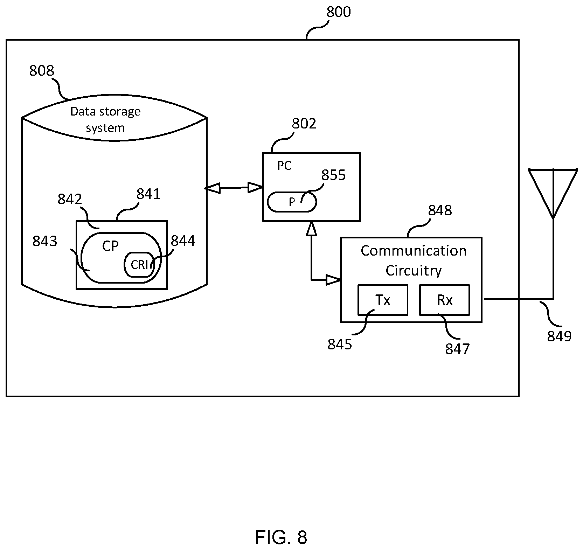

FIG. 8 shows an apparatus (e.g., a server, a mobile phone, a smartphone, a tablet, a laptop, a desktop, etc.) capable of performing all steps included in process 400 (shown in FIG. 4) or at least some of the steps included in process 400 (shown in FIG. 4). As shown in FIG. 8, the apparatus may comprise: processing circuitry (PC) 802, which may include one or more processors (P) 855 (e.g., one or more general purpose microprocessors and/or one or more other processors, such as an application specific integrated circuit (ASIC), field-programmable gate arrays (FPGAs), and the like); communication circuitry 848, which is coupled to an antenna arrangement 849 comprising one or more antennas and which comprises a transmitter (Tx) 845 and a receiver (Rx) 847 for enabling the apparatus to transmit data and receive data (e.g., wirelessly transmit/receive data); and a local storage unit (a.k.a., "data storage system") 808, which may include one or more non-volatile storage devices and/or one or more volatile storage devices. In some embodiments, the apparatus may not include the antenna arrangement 849 but instead may include a connection arrangement needed for sending and/or receiving data using a wired connection. In embodiments where PC 802 includes a programmable processor, a computer program product (CPP) 841 may be provided. CPP 841 includes a computer readable medium (CRM) 842 storing a computer program (CP) 843 comprising computer readable instructions (CRI) 844. CRM 842 may be a non-transitory computer readable medium, such as, magnetic media (e.g., a hard disk), optical media, memory devices (e.g., random access memory, flash memory), and the like. In some embodiments, the CRI 844 of computer program 843 is configured such that when executed by PC 802, the CRI causes the apparatus to perform steps described herein (e.g., steps described herein with reference to the flow charts). In other embodiments, the apparatus may be configured to perform steps described herein without the need for code. That is, for example, PC 802 may consist merely of one or more ASICs. Hence, the features of the embodiments described herein may be implemented in hardware and/or software.

## Claims

1. A computer-implemented method (700) of determining a scale factor, the method comprising:

   capturing (s702) a real-world environment using a camera resting on a plane, wherein the camera captures a wide view of a real-world environment, thereby generating an image, wherein the camera comprises a supporting base including a first reference point, and wherein the wide view includes a view of the supporting base of the camera such that the first reference point is included in the image;
   based on the image, identifying (s704) a first three-dimensional (3D) point of a virtual 3D environment that is a reconstruction of the real-world environment, wherein the first 3D point is mapped to the first reference point of the supporting base; and
   determining (s706) the scale factor based on a coordinate of the first 3D point, wherein the method further comprises:

   based on the coordinate of the first 3D point, calculating a first distance value indicating a real-world distance between the camera and the plane
   the first distance value being calculated by:

   determining a first directional vector between the first 3D point and the camera;
   and
   determining an angle value indicating an angle formed by the first directional vector with respect to a reference axis, the reference axis being perpendicular to the plane on which the camera rests;
   using the angle value and a third distance value, the third distance value indicating a real-world distance between the first reference point of the supporting base and an intersection point of the reference axis and the plane; and

   calculating a second distance value indicating a virtual distance between the camera and the plane, and
   determining the scale factor based on the first and second distance values.

2. The method of claim 1, wherein

the supporting base is a tripod, and
the first reference point is a tip of the tripod.

3. The method of claim 1 or 2, wherein $H = \dfrac{L_S}{\tan(\beta)}$, where H is the first distance value, Ls is the third distance value, and $\beta$ is the angle value.

4. The method of any one of claims 1 to 3, comprising:

based on the image, identifying a 3D floor point on the plane; and
determining a coordinate of an intersection point of a reference axis and the plane based on a coordinate of the 3D floor point and a coordinate of a basis point of the camera, wherein the second distance value is calculated based on the coordinate of the intersection point and the coordinate of the basis point of the camera.

5. The method of claim 4, wherein $P^* = P - (n \cdot (P - O))n,$ where P* is the coordinate of the intersection point, P is the coordinate of the basis point of the camera, O is the coordinate of the 3D floor point, and n is a normal vector of the plane.

6. The method of any one of claims 1-5, wherein

the supporting base comprises a plurality of reference points including the first reference point, and
the method further comprises:

based on the image, identifying a plurality of 3D points of the virtual 3D environment, wherein each of the plurality of 3D points is mapped to each of the plurality of reference points; and
determining the scale factor based on coordinates of the plurality of 3D points.

7. The method of claim 6, comprising:

determining a directional vector between each of the plurality of 3D points and a virtual basis point of the camera;
determining an angle value indicating an angle formed by each of the determined directional vectors with respect to a reference axis; and
calculating a plurality of distance values using the determined angle values and one or more reference distance values, wherein
said one or more reference distance values indicate a reference distance between each of the plurality of reference points of the supporting base and an intersection point of the reference axis and the plane within the real-environment, and

the scale factor is determined based on an average of the plurality of distance values.

8. The method of claim 7, wherein $S = \dfrac{H_{in}}{H_{avg}} \ or \ \dfrac{H_{avg}}{H_{in}}$, where S is the scale factor, $H_{in}$ is the second distance value, and $H_{avg}$ is the average of the plurality of distance values.

9. The method of any one of claims 1-8, wherein the scale factor is for determining a real-world dimension of an item included in the real-world environment.

10. A computer program (843) comprising instructions (844) which when executed by processing circuitry (802) cause the processing circuitry to perform the method of any one of claims 1-9.

11. An apparatus (800) for determining a scale factor, the apparatus being configured to:

capture (s702) a real-world environment using a camera resting on a plane, wherein the camera is configured to capture a wide view of a real-world environment, thereby generating an image, wherein the camera comprises a supporting base including a first reference point, and wherein the wide view includes a view of the supporting base of the camera such that the first reference point is included in the image;
based on the image, identify (s704) a first three-dimensional (3D) point of a virtual 3D environment that is a reconstruction of the real-world environment, wherein the first 3D point is mapped to the first reference point of the supporting base; and
determine (s706) the scale factor based on a coordinate of the first 3D point,
the apparatus (800) being further configured to .

based on the coordinate of the first 3D point, calculate a first distance value indicating a real-world distance between the camera and the plane by:

determining a first directional vector between the first 3D point and the camera;
determining an angle value indicating an angle formed by the first directional vector with respect to a reference axis, the reference axis being perpendicular to the plane on which the camera rests; and
using the angle value and a third distance value, the third distance value indicating a real-world distance between the first reference point of the supporting base and an intersection point of the reference axis and the plane; and

calculate a second distance value indicating a virtual distance between the camera and the plane, and determine the scale factor based on the first and second distance values.

12. The apparatus of claim 11, wherein

the supporting base is a tripod, and the first reference point is a tip of the tripod.

13. The apparatus of claim 11 or 12, wherein $H = \frac{L_S}{\tan(\beta)}$, where H is the first distance value, Ls is the third distance value, and $\beta$ is the angle value.

14. The apparatus of any one of claims 11-13, further being configured to:

based on the image, identify a 3D floor point on the plane; and determine a coordinate of an intersection point of a reference axis and the plane based on a coordinate of the 3D floor point and a coordinate of a basis point of the camera, wherein the second distance value is calculated based on the coordinate of the intersection point and the coordinate of the basis point of the camera.

15. The apparatus of claim 14, wherein $P^* = P - (n \cdot (P - O))$ n, where P* is the coordinate of the intersection point, P is the coordinate of the basis point of the camera, O is the coordinate of the 3D floor point, and n is a normal vector of the plane.

16. The apparatus of any one of claims 11-15, wherein

the supporting base comprises a plurality of reference points including the first reference point, and the apparatus is further configured to:

based on the image, identify a plurality of 3D points of the virtual 3D environment, wherein each of the plurality of 3D points is mapped to each of the plurality of reference points; and determine the scale factor based on coordinates of the plurality of 3D points.

17. An apparatus (800) comprising:

a processing circuitry (802); and a memory (841), said memory containing instructions executable by said processing circuitry, whereby the apparatus is operative to perform the method of any one of claims 1-9.

**Patentansprüche**

1. Computerimplementiertes Verfahren (700) zum Bestimmen eines Skalenfaktors, wobei das Verfahren Folgendes umfasst:

Aufnehmen (s702) einer realen Umgebung unter Verwendung einer Kamera, die auf einem Flugzeug ruht, wobei die Kamera eine Weitansicht der realen Umgebung aufnimmt, dadurch Erzeugen eines Bildes, wobei die Kamera eine Stützbasis umfasst, die einen ersten Referenzpunkt beinhaltet, und wobei die Weitansicht eine Ansicht der Stützbasis der Kamera derart beinhaltet, dass der erste Referenzpunkt in dem Bild enthalten ist; basierend auf dem Bild, Identifizieren (s704) eines ersten dreidimensionalen (3D) Punktes einer virtuellen 3D-Umgebung, die eine Rekonstruktion der realen Umgebung ist, wobei der erste 3D-Punkt dem ersten Referenzpunkt der Stützbasis zugeordnet ist; und Bestimmen (s706) des Skalenfaktors basierend auf einer Koordinate des ersten 3D-Punktes, wobei das Verfahren ferner Folgendes umfasst:

basierend auf der Koordinate des ersten 3D-Punktes, Berechnen eines ersten Abstandswerts, der einen realen Abstand zwischen der Kamera und dem Flugzeug angibt, wobei der erste Abstandswert durch Folgendes berechnet wird:

Bestimmen eines ersten Richtungsvektors zwischen dem ersten 3D-Punkt und der Kamera; und Bestimmen eines Winkelwerts, der einen Winkel angibt, welcher durch den ersten Richtungsvektor in Bezug auf eine Referenzachse ausgebildet wird, wobei die Referenzachse senkrecht zu dem Flugzeug verläuft, auf welchem die Kamera ruht; Verwenden des Winkelwerts und eines dritten Abstandswerts, wobei der dritte Abstandswert einen realen Abstand zwischen dem ersten Referenzwert der Stützbasis und einem Schnittpunkt der Referenzachse und dem Flugzeug angibt; und

Berechnen eines zweiten Abstandswerts, der einen virtuellen Abstand zwischen der Kamera und dem Flugzeug angibt, und Bestimmen des Skalenfaktors basierend auf dem ersten und dem zweiten Abstandswert.

2. Verfahren nach Anspruch 1, wobei:

   die Stützbasis ein Stativ ist, und
   der erste Referenzpunkt eine Spitze des Stativs ist.

3. Verfahren nach Anspruch 1 oder 2, wobei $H = \frac{L_S}{\tan(\beta)}$ , wobei H der erste Abstandswert ist, Ls der dritte Abstandswert ist und $\beta$ der Winkelwert ist.

4. Verfahren nach einem der Ansprüche 1 bis 3, umfassend:

   basierend auf dem Bild, Identifizieren eines 3D-Bodenpunktes auf dem Flugzeug; und
   Bestimmen einer Koordinate eines Schnittpunktes einer Referenzachse und des Flugzeugs basierend auf einer Koordinate des 3D-Bodenpunktes und einer Koordinate eines Basispunktes der Kamera, wobei der zweite Abstandswert basierend auf der Koordinate des Schnittpunktes und der Koordinate des Basispunktes der Kamera berechnet wird.

5. Verfahren nach Anspruch 4, wobei $P^* = P - (n \cdot (P - O))$ n, wobei P* die Koordinate des Schnittpunktes ist, P die Koordinate des Basispunktes der Kamera ist, O die Koordinate des 3D-Bodenpunktes ist und n ein Normalvektor des Flugzeugs ist.

6. Verfahren nach einem der Ansprüche 1-5, wobei

   die Stützbasis eine Vielzahl von Referenzpunkten umfasst, die den ersten Referenzpunkt beinhaltet, und
   das Verfahren ferner Folgendes umfasst:

   basierend auf dem Bild, Identifizieren einer Vielzahl von 3D-Punkten der virtuellen 3D-Umgebung, wobei jeder der Vielzahl von 3D-Punkten jeder der Vielzahl von Referenzpunkten zugeordnet ist; und
   Bestimmen des Skalenfaktors basierend auf Koordinaten der Vielzahl von 3D-Punkten.

7. Verfahren nach Anspruch 6, umfassend:

   Bestimmen eines Richtungsvektors zwischen jedem der Vielzahl von 3D-Punkten und einem virtuellen Basispunkt der Kamera;
Bestimmen eines Winkelwerts, der einen Winkel angibt, welcher durch jeden der bestimmten Richtungsvektoren in Bezug auf eine Referenzachse ausgebildet wird; und
Berechnen einer Vielzahl von Abstandswerten unter Verwendung der bestimmten Winkelwerte und einem oder mehreren Referenzabstandswerten, wobei
der eine oder die mehreren Referenzabstandswerte einen Referenzabstand zwischen jedem der Vielzahl von Referenzpunkten der Stützbasis und einem Schnittpunkt der Referenzachse und dem Flugzeug innerhalb der realen Umgebung angeben, und
der Skalenfaktor basierend auf einem Durchschnitt der Vielzahl von Abstandswerten bestimmt wird.

8. Verfahren nach Anspruch 7, wobei $S = \frac{H_{in}}{H_{avg}} \, oder \, \frac{H_{avg}}{H_{in}}$ , wobei S der Skalenfaktor ist, $H_{in}$ der zweite Abstandswert ist und $H_{avg}$ der Durchschnitt der Vielzahl von Abstandswerten ist.

9. Verfahren nach einem der Ansprüche 1-8, wobei der Skalenfaktor zum Bestimmen einer realen Dimension eines Gegenstands dient, der in der realen Umgebung enthalten ist.

10. Computerprogramm (843), umfassend Anweisungen (844), welche bei Ausführung durch eine Verarbeitungsschaltung (802) bewirken, dass die Verarbeitungsschaltung (902) das Verfahren nach einem der Ansprüche 1-9 durchführt.

11. Einrichtung (800) zum Bestimmen eines Skalenfaktors, wobei die Einrichtung dazu konfiguriert ist:

    eine reale Umgebung unter Verwendung einer Kamera, die auf einem Flugzeug ruht, aufzunehmen (s702), wobei die Kamera dazu konfiguriert ist, eine Weitansicht der realen Umgebung aufzunehmen und dadurch ein Bild zu erzeugen, wobei die Kamera eine Stützbasis umfasst, die einen ersten Referenzpunkt beinhaltet, und wobei die Weitansicht eine Ansicht der Stützbasis der Kamera derart beinhaltet, dass der erste Referenzpunkt in dem Bild enthalten ist;
    basierend auf dem Bild einen ersten dreidimensionalen (3D) Punkt einer virtuellen 3D-Umgebung, die eine Rekonstruktion der realen Umgebung ist, zu identifizieren (s704), wobei der erste 3D-Punkt dem ersten Referenzpunkt der Stützbasis zugeordnet ist; und

den Skalenfaktor basierend auf einer Koordinate des ersten 3D-Punktes zu bestimmen (s706), wobei die Einrichtung (800) ferner dazu konfiguriert ist.

basierend auf der Koordinate des ersten 3D-Punktes einen ersten Abstandswert zu berechnen, der einen realen Abstand zwischen der Kamera und dem Flugzeug angibt, durch:

Bestimmen eines ersten Richtungsvektors zwischen dem ersten 3D-Punkt und der Kamera;
Bestimmen eines Winkelwerts, der einen Winkel angibt, welcher durch den ersten Richtungsvektor in Bezug auf eine Referenzachse ausgebildet wird, wobei die Referenzachse senkrecht zu dem Flugzeug verläuft, auf welchem die Kamera ruht; und
Verwenden des Winkelwerts und eines dritten Abstandswerts, wobei der dritte Abstandswert einen realen Abstand zwischen dem ersten Referenzwert der Stützbasis und einem Schnittpunkt der Referenzachse und dem Flugzeug angibt; und

einen zweiten Abstandswert zu berechnen, der einen virtuellen Abstand zwischen der Kamera und dem Flugzeug angibt, und den Skalenfaktor basierend auf dem ersten und dem zweiten Abstandswert zu bestimmen.

**12.** Einrichtung nach Anspruch 11, wobei

die Stützbasis ein Stativ ist, und
der erste Referenzpunkt eine Spitze des Stativs ist.

**13.** Einrichtung nach Anspruch 11 oder 12, wobei

$$H = \frac{L_S}{\tan(\beta)}$$ , wobei H der erste Abstandswert ist, Ls der dritte Abstandswert ist und $\beta$ der Winkelwert ist.

**14.** Einrichtung nach einem der Ansprüche 11-13, die ferner dazu konfiguriert ist:

basierend auf dem Bild einen 3D-Bodenpunkt auf dem Flugzeug zu identifizieren; und
eine Koordinate eines Schnittpunktes einer Referenzachse und des Flugzeugs basierend auf einer Koordinate des 3D-Bodenpunktes und einer Koordinate eines Basispunktes der Kamera zu bestimmen, wobei der zweite Abstandswert basierend auf der Koordinate des Schnittpunktes und der Koordinate des Basispunktes der Kamera berechnet wird.

**15.** Einrichtung nach Anspruch 14, wobei $P^* = P - (n \cdot (P - O))n$, wobei $P^*$ die Koordinate des Schnittpunktes ist, P die Koordinate des Basispunktes der Kamera ist, O die Koordinate des 3D-Bodenpunktes ist und n ein Normalvektor des Flugzeugs ist.

**16.** Einrichtung nach einem der Ansprüche 11-15, wobei

die Stützbasis eine Vielzahl von Referenzpunkten umfasst, die den ersten Referenzpunkt beinhaltet, und
die Einrichtung ferner dazu konfiguriert ist:

basierend auf dem Bild eine Vielzahl von 3D-Punkten der virtuellen 3D-Umgebung zu identifizieren, wobei jeder der Vielzahl von 3D-Punkten jeder der Vielzahl von Referenzpunkten zugeordnet ist; und
den Skalenfaktor basierend auf Koordinaten der Vielzahl von 3D-Punkten zu bestimmen.

**17.** Einrichtung (800), umfassend:

eine Verarbeitungsschaltung (802); und
einen Speicher (841), wobei der Speicher Anweisungen enthält, die durch die Verarbeitungsschaltung ausführbar sind, wobei die Einrichtung dazu betreibbar ist, das Verfahren nach einem der Ansprüche 1-9 durchzuführen.

**Revendications**

**1.** Procédé mis en œuvre par ordinateur (700) de détermination d'un facteur d'échelle, le procédé comprenant :

la capture (s702) d'un environnement du monde réel à l'aide d'une caméra reposant sur un plan, dans lequel la caméra capture une vue large d'un environnement du monde réel, générant ainsi une image, dans lequel la caméra comprend une base de support incluant un premier point de référence, et dans lequel la vue large inclut une vue de la base de support de la caméra de telle sorte que le premier point de référence est inclus dans l'image ;
à partir de l'image, l'identification (s704) d'un premier point tridimensionnel (3D) d'un environnement 3D virtuel qui est une reconstruction de l'environnement du monde réel, dans lequel le premier point 3D est mis en correspondance avec le premier point de référence de la base de support ; et

la détermination (s706) du facteur d'échelle à partir d'une coordonnée du premier point 3D, le procédé comprenant en outre :

à partir de la coordonnée du premier point 3D, le calcul d'une première valeur de distance indiquant une distance du monde réel entre la caméra et le plan,

la première valeur de distance étant calculée par :

la détermination d'un premier vecteur directionnel entre le premier point 3D et la caméra ; et

la détermination d'une valeur d'angle indiquant un angle formé par le premier vecteur directionnel par rapport à un axe de référence, l'axe de référence étant perpendiculaire au plan sur lequel repose la caméra ;

l'utilisation de la valeur d'angle et d'une troisième valeur de distance, la troisième valeur de distance indiquant une distance du monde réel entre le premier point de référence de la base de support et un point d'intersection de l'axe de référence et du plan ; et

le calcul d'une deuxième valeur de distance indiquant une distance virtuelle entre la caméra et le plan, et

la détermination du facteur d'échelle à partir des première et deuxième valeurs de distance.

2. Procédé selon la revendication 1, dans lequel

la base de support est un trépied, et

le premier point de référence est une pointe du trépied.

3. Procédé selon la revendication 1 ou 2, dans lequel $H = \frac{L_S}{\tan(\beta)}$ , où H est la première valeur de distance, Ls is la troisième valeur de distance, et $\beta$ est la valeur d'angle.

4. Procédé selon l'une quelconque des revendications 1 à 3, comprenant :

à partir de l'image, l'identification d'un point de sol 3D sur le plan ; et

la détermination d'une coordonnée d'un point d'intersection d'un axe de référence et du plan à partir d'une coordonnée du point de sol 3D et d'une coordonnée d'un point de base de la caméra, dans lequel la deuxième valeur de distance est calculée à partir de la coordonnée du point d'intersection et de la coordonnée du point de base de la caméra.

5. Procédé selon la revendication 4, dans lequel *P\* = P - (n · (P - O))n,* où P est la coordonnée du point d'intersection, P est la coordonnée du point de base de la caméra, O est la coordonnée du point de sol 3D, et n est un vecteur normal du plan.

6. Procédé selon l'une quelconque des revendications 1 à 5, dans leque

la base de support comprend une pluralité de points de référence incluant le premier point de référence, et

le procédé comprend en outre :

à partir de l'image, l'identification d'une pluralité de points 3D de l'environnement 3D virtuel, dans lequel chacun de la pluralité de points 3D est mis en correspondance avec chacun de la pluralité de points de référence ; et

la détermination du facteur d'échelle à partir de coordonnées de la pluralité de points 3D.

7. Procédé selon la revendication 6, comprenant :

la détermination d'un vecteur directionnel entre chacun de la pluralité de points 3D et un point de base virtuel de la caméra ;

la détermination d'une valeur d'angle indiquant un angle formé par chacun des vecteurs directionnels déterminés par rapport à un axe de référence ; et

le calcul d'une pluralité de valeurs de distance à l'aide des valeurs d'angle déterminées et d'une ou plusieurs valeurs de distance de référence, dans lequel

les une ou plusieurs valeurs de distance de référence indiquent une distance de référence entre chacun de la pluralité de points de référence de la base de support et un point d'intersection de l'axe de référence et du plan au sein de l'environnement du monde réel, et

le facteur d'échelle est déterminé à partir d'une moyenne de la pluralité de valeurs de distance.

8. Procédé selon la revendication 7, dans lequel $S = \frac{H_{in}}{H_{avg}}$ or $\frac{H_{avg}}{H_{in}}$ , où S est le facteur d'échelle, $H_{in}$ est la deuxième valeur de distance, et $H_{avg}$ est la moyenne de la pluralité de valeurs de distance.

**9.** Procédé selon l'une quelconque des revendications 1 à 8, dans lequel le facteur d'échelle est destiné à déterminer une dimension du monde réel d'un article inclus dans l'environnement du monde réel.

**10.** Programme informatique (843) comprenant des instructions (844) qui, lorsqu'elles sont exécutées par un circuit de traitement (802), amènent le circuit de traitement à réaliser le procédé selon l'une quelconque des revendications 1 à 9.

**11.** Appareil (800) de détermination d'un facteur d'échelle, l'appareil étant configuré pour :

capturer (s702) un environnement du monde réel à l'aide d'une caméra reposant sur un plan, dans lequel la caméra est configurée pour capturer une vue large d'un environnement du monde réel, générant ainsi une image, dans lequel la caméra comprend une base de support incluant un premier point de référence, et dans lequel la vue large inclut une vue de la base de support de la caméra de telle sorte que le premier point de référence est inclus dans l'image ; à partir de l'image, identifier (s704) un premier point tridimensionnel (3D) d'un environnement 3D virtuel qui est une reconstruction de l'environnement du monde réel, dans lequel le premier point 3D est mis en correspondance avec le premier point de référence de la base de support ; et déterminer (s706) le facteur d'échelle à partir d'une coordonnée du premier point 3D, l'appareil (800) étant en outre configuré pour :

à partir de la coordonnée du premier point 3D, calculer une première valeur de distance indiquant une distance du monde réel entre la caméra et le plan par :

la détermination d'un premier vecteur directionnel entre le premier point 3D et la caméra ; la détermination d'une valeur d'angle indiquant un angle formé par le premier vecteur directionnel par rapport à un axe de référence, l'axe de référence étant perpendiculaire au plan sur lequel repose la caméra ; et l'utilisation de la valeur d'angle et d'une troisième valeur de distance, la troisième valeur de distance indiquant une distance du monde réel entre le premier point de référence de la base de support et un point d'intersection de l'axe de référence et du plan ; et

calculer une deuxième valeur de distance indiquant une distance virtuelle entre la caméra et le plan, et déterminer le facteur d'échelle à partir des première et deuxième valeurs de distance.

**12.** Appareil selon la revendication 11, dans lequel

la base de support est un trépied, et le premier point de référence est une pointe du trépied.

**13.** Appareil selon la revendication 11 ou 12, dans lequel

$$H = \frac{L_S}{\tan(\beta)}$$, où H est la première valeur de distance, Ls est la troisième valeur de distance, et $\beta$ est la valeur d'angle.

**14.** Appareil selon l'une quelconque des revendications 11 à 13, étant en outre configuré pour :

à partir de l'image, identifier un point de sol 3D sur le plan ; et déterminer une coordonnée d'un point d'intersection d'un axe de référence et du plan à partir d'une coordonnée du point de sol 3D et d'une coordonnée d'un point de base de la caméra, dans lequel la deuxième valeur de distance est calculée à partir de la coordonnée du point d'intersection et de la coordonnée du point de base de la caméra.

**15.** Appareil selon la revendication 14, dans lequel $P^* = P - (n \cdot (P - O))n$, où P* est la coordonnée du point d'intersection, P est la coordonnée du point de base de la caméra, O est la coordonnée du point de sol 3D, et n est un vecteur normal du plan.

**16.** Appareil selon l'une quelconque des revendications 11 à 15, dans lequel

la base de support comprend une pluralité de points de référence incluant le premier point de référence, et l'appareil est en outre configuré pour :

à partir de l'image, identifier une pluralité de points 3D de l'environnement 3D virtuel, dans lequel chacun de la pluralité de points 3D est mis en correspondance avec chacun de la pluralité de points de référence ; et déterminer le facteur d'échelle à partir de coordonnées de la pluralité de points 3D.

**17.** Appareil (800) comprenant :

un circuit de traitement (802) ; et une mémoire (841), ladite mémoire contenant des instructions exécutables par ledit circuit de traitement, moyennant quoi l'appareil est fonctionnel pour réaliser le procédé selon l'une quelconque des revendications 1 à 9.

FIG. 1

EP 4 544 500 B1

FIG. 2

14

FIG. 3

400

| Capturing a real-world environment, thereby generating a captured image | s402 |

↓

| Converting the captured image into a converted image | s404 |

↓

| Running an estimation process on the converted image to obtain depthmap | s406 |

↓

| Determining a set of 3D points in a 3D space that is a reconstruction of the real-world environment | s408 |

s410

↓

| Identifying from the set of 3D points one or more 3D points mapped to one or more reference points of a camera |

↓

| Estimating a vector from a basis point of the camera to each of the 3D points identified in step s410 | s412 |

s414

↓

| Determining an angle formed by each of the vectors estimated in step s412 and a reference axis. |

↓

| Calculating a height value indicating a distance between the basis point of the camera and the plane | s416 |

s418

↓

| Determining an average of height values for the plurality of 3D points identified in step s410 |

↓

| Identifying one or more 3D floor points | s420 |

s422

↓

| Calculating an orthogonal projection of the basis point of the camera onto the plane |

↓

| Determining a virtual height value | s424 |

s426

↓

| Determining the scale factor based on the virtual height value |

FIG. 4

FIG. 5

FIG. 6

700

s702

capturing a real-world environment using a camera resting
on a plane, thereby generating an image

s704

based on the image, identifying a first three-dimensional (3D) point of a virtual
3D environment that is a reconstruction of the real-world environment

s706

determining a scale factor based on a coordinate
of the first 3D point

FIG. 7

FIG. 8

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021056751 A1
- US 2022091486 A1